# EUROPEAN PATENT APPLICATION

(11) **EP 2 457 870 A1**
(43) Date of publication of application: **30.05.2012**
(21) Application number: 09847621.1
(22) Date of filing: 22.10.2009
(51) Int. Cl.: C01B 31/02, C04B 28/02, B82B 1/00

(54) **NANOCOMPOSITE MATERIAL CONTAINING MINERAL BINDERS**

(30) Priority: 21.07.2009 RU 2009000036 U
(71) Applicant: Ponomarev, Andrei Nikolaevich, St.Petersburg 198099 (RU)
(72) Inventor: IUDOVICH, Mikhail Eugenievich, 197227 St.Petersburg (RU); PONOMAREV,Andrey, 198099 Saint Petersburg (RU)
(74) Representative: Delamare, Raoul
(86) International application number: PCT/RU2009/000562
(87) International publication number: WO 2011/010947

(57) **Abstract**

According to the invention it is proposed a nanocomposite material based on mineral binders, comprising a mineral binder, a mineral filler and a fraction of nanoparticles, **characterized in that** the fraction of nanoparticles includes multi-layered carbon particles of a toroidal shape with a size from 15 to 150 nm, wherein the ratio between the outer diameter and the thickness of the thorus body is in the range of (10-3):1.

## Description

### Field of the invention

The claimed invention relates to a field of composite materials based on mineral binders such as Portland cement, lime, gypsum, or mixtures thereof, filled with mineral fillers with fractions of nanoparticles. Such composite materials based on mineral binders are used as building materials in the construction of buildings and structures, as well as objects of transport and hydraulic engineering (bridges, tunnels, dams, dikes, etc.).

### Prior art

Composite materials based on mineral binders typically consist of hydrated cements, lime, gypsum or slag cement binders, mixed with mineral fillers of different particle size fractions. To optimize the dense packing of heterogeneous materials, to consolidate cement stone and to enhance physical and mechanical parameters of composits in general, various fractions of nanoparticles (ultra fine cement, microsilica and (or) carbon clusters of a fulleroid type) are embedded in the compositions based on mineral binders. Such composite materials are called "nanocomposites".

The closest in all essential features to the claimed is a nanocomposite material based on mineral binders comprising a mineral binder selected from the group including cement, lime, gypsum, or mixtures thereof, and water, and further comprising a fraction of nanoparticles in the form of carbon clusters of the fulleroid type with 36 or more of carbon atoms, wherein the components are taken in the following proportions, % by weight: mineral binder 33-77; carbon clusters of the fulleroid type 0,0001-2,0; water - the rest [RU 2233254 C2, 2004]. The disadvantages of this technical solution are physical and mechanical characteristics of the nanocomposite material which are not high enough and a requirement to it to be rich in mineral binders (no less than 33 % by weight).

### Essence of the invention

The purpose of this invention is to produce a nanocomposite material based on mineral binders with improved physical and mechanical characteristics, namely: compressive strength and water resistance; and a lower threshold for the minimum content of binder.

This problem is solved in that the nanocomposite material comprising a mineral binder, a mineral filler, and further comprising a fraction of nanoparticles is proposed, wherein the fraction of nanoparticles includes multi-layered carbon nanoparticles of a toroidal shape, wherein the ratio between the outer diameter and the thickness of the thorus body is in the range of (10-3):1.

An ambedding of such modifying agent permits to achieve an effective consolidation and hardening of the nanocomposite material near the interphase borders filler/cement stone (the product of hydration of the mineral binder), and, thus, to increase its strength.

The said carbon particles of the toriodal shape preferably have a fulleroid type. An interlayer distance in these particles is equal to 0,34-0,36 nm.

It is rational when the said particles of the toroidal shape represent those particles of a crust of a cathode deposit obtained by evaporation of a graphite anode in an arc process and subjected to a gas-phase oxidation, which are exposed to an electric field effect.

It is preferable, in obtaining method, to mill the crust before the oxidation, and to carry out the gas-phase oxidation in a superhigh frequency field, and it is also possible, after the gas-phase oxidation, before testing for susceptibility to the electric field effect, to carry out additionally a liquid-phase oxidation.

The described method allows obtaining the particles with required characteristics.

The fraction of nanoparticles in the proposed composite material can additionally include carbon nanotubes.

The ratio between the carbon nanotubes and the said carbon nanoparticles can be from 1:10 to 10:1.

The fraction of nanoparticles in the proposed composite material can additionally include functionalized water-soluble fullerenes.

The ratio between the fullerenes and the said nanoparticles can be from 1:10 to 1:10000.

The functionalized fullerenes can represent themselves Rₙ-C-60, Rₙ-C-70 and similar, where the R- are radicals such as amines, sulphonic acid and hydroxyl or other functional groups providing water solubility of the fullerenes. It is possible to use their mixtures as well as mixtures of the fullerenes and carbon nanotubes.

If the fraction of nanoparticles in the proposed composite material does not include fullerenes and nanotubes, it is rational that the multi-layered carbon nanoparticles of the toroidal shape constitute at least 5% by weight of the fraction. Herewith, the rest of the fraction can be represented by, for example, polyhedral nanoparticles. Such amount of carbon nanoparticles of the toroidal shape is enough to provide the desired technical effect.

It is rational when the fraction of nanoparticles in the proposed composite material is present in an amount up to 3% by weight of the mineral binder. Herewith, the desired effect is already reached when such particles are present in an amount of 0,00003% by weight of the binder.

In a preferred embodiment of the invention the filler is quartz or washed river sand.

### Detailed description of the invention

The present invention is **characterized in that** a nanofraction in the composite material based on mineral binders includes multi-layered carbon nanoparticles of a toroidal shape (MNTS).

By definition, a torus is the body obtained by rotating a circle about an axis lying in its plane. Although the ball is a special case of the torus, the said ratio between the outer diameter and the thickness of the torus body specified for the particles according to the invention eliminates spherical particles.

The particles according to the invention, while maintaining the said ratio between the outer diameter and the thickness of the torus body, can be represented by irregular tori, the outer boundary projections of which on a plane is a broken line. The structure of the particles according to the invention may be similar to multi-layered nanotubes which are so closed that they do not have loose ends.

A monolayer of particle may have a fulleroid structure, that is can represent an uninterrupted network consisting of five- and six- membered rings with alternating σ and π - bonds. However, it is determined by the applicant that the technical result is achieved not so much due to the nature of this layer, but mainly due to the shape of the nanoparticles.

It is discovered by the applicant that the multi-layered nanoparticles precisely of the toroidal shape (MNTS) have an unexpected ability to increase an average density of the material that is probably achieved by an anomalously strong dispersion interaction with a surface of the filler (in particular, of quartz or washed river sand) and nearest fragments of a cement stone.

Thus, it is achieved the technical result consisting in compaction of the nanocomposite material near the interphase boundaries, and therefore in growth of its strength and in reduction of the threshold for the minimum content of binder in such material.

MNTS can have different geometrical parameters, such as the ratio of the outer diameter to the thickness of the multi-layered body of the torus. The said parameters can be measured with a transmission electron microscope or obtained from the results of X-ray-structural analysis.

It is found by the applicant that the particles wherein the ratio between the outer diameter and the thickness of the thorus body is in the range of (10-3):1, provide the achievement of the said technical result, and the preferable ratio is (5-4): 1, and the more preferable ratio is 4,5:1 for the carbon nanoparticles of the fulleroid type.

An embedding of the torus-like nanoparticles according to the invention can be realised in addition to a well-known modification of the nanocomposite materials by the nanotubes, by polyhedral carbon nanostructures of the fulleroid type and by fullerenes.

The embedding of the nanotubes as such provides some increase in strength of the cement stone which is formed during hydration of the mineral binder; and a simultaneous additional modification of the nanocomposite material by the multi-layered carbon nanoparticles of the toroidal shape provides structuring of the nanotubes with an unexpected increase of the strength of the hydrated mineral binder, which had previously failed to achieve.

It is clear that the carbon nanotubes are a good material for strengthening because they possess high tensile strengh and a high ratio of length to diameter. However, for the carbon nanotubes, a slippage of the walls relative to each other is observed, that reduces the materially achievable values of the strength of the nanocomposite material, and atomically smooth outer surfaces of the nanotubes lead to their poor adhesion with the reinforcing material.

The embedding in the structure of the multi-layered nanocomposite material of the multy-layered nanoparticles of the toroidal shape leads to a growth of the adhesive force of the nanotubes with the reinforcing material, apparently due to their anomalously strong dispersion interaction with the torus-like nanoparticles.

The embedding of the fullerenes provides, as it is well known, an improvement of surface properties of components of the nanocomposite material, which, combined with the embedding of the said multi-layered carbon nanoparticles of the toroidal shape, leads to a synergistic improvement of the interphase interaction into the nanocomposite material.

The multi-layered carbon torus-like shaped nanoparticles of the fulleroid type are obtained from a crust of a cathode deposit, obtained by a thermal or by a plasma evaporation of a graphite anode under a direct-current flow in the gap between the anode and the cathode in the atmosphere of an inert gas; and are separated from the total mass of the carbon nanoparticles obtained in that way, for exampe, by a method of a successive oxidation and a subsequent separation under the force interaction between the electrodes, for example, in the process of a self emission from the carbon cathodes.

The cathode deposit can be obtained by an electro-arched erosion of the anode graphite rod with a section of 30-160 mm² at a current density of 80-200 A/cm² and a voltage drop on the arc of 20-28 V in a helium atmosphere at a pressure of 40-100 Torr (for example, as it is described in the patent RU 2196731, 2000).

For further processing, they select a dense crust of the cathode deposit, separating it from a loose middle and mill it.

An oxidation is carried out in a superhigh frequency field, such as a field with a frequency of 2,5 GHz and with a power of 500-1500 Wt. Before placing in the superhigh frequency field, the milled cathode deposit is placed in a rotating quartz tube. Such gas-phase oxidation is carried out during 100-150 min.

After the gas-phase oxidation, the obtained product can be further subjected to an electrochemical oxidation.

Also, after the gas-phase and/or electrochemical oxidation the obtained product can be placed in a medium of a liquid gas (nitrogen, helium).

At the end of the separation under the force interaction of the electrodes, the product obtained at different electrodes is collected into an organic solvent.

In order to determine basic physical parameters it is possible to separate the product from the solvent and to examine as per the following methods:
- using the transmission electron microscope, for example JEM-100C, and standard samples of latex beads, they determine the sizes, the shape and the ratio between the outer diameters of the torus-like nanoparticles and the thickness of their muli-layred body.
- radiographically they determine the inter-layer distance in multi-layered carbon nanoparticles; the distance of 0,34-0,36 nm is characteristic for carbon compounds of the fulleroid type;

The fullerenes and the nanotubes can be obtained as described, for example, in the patent [RU 2234457, 2001]. They also are commercially available under trademarks such as "Fullerenes" and "Taunit". Une functionalization of the fullerenes, necessary to achieve their water solubility, can be made, for example, by a treatment of the initial fullerenes in potassium hydroxide or by boiling in sulfuric acid solutions.

As a mineral binder it is used Portland cement PC500D0, building semi-aquatic gypsum (CaSO₄ 0,5 H₂O), technical limestone and its mixtures; as a mineral filler it is used a washed river sand with a fineness modulus of 0-1,0; technical water GOST 23732 is also used. The ratio of components in the composite material is 16-76 % by weight for the mineral binder; 16-76 % by weight for the filler; 3-0,00003 % by weight for the fraction of the nanoparticles, and the rest is technical water.

The nanocomposite material can be obtained by the following method.

The multi-layered carbon nanoparticles of the toroidal shape or their mixture with nanotubes and fullerenes are mixed with a previously prepared portion of water; afterwards they are exposed to homogenization in an ultrasonic homogenizer. In the prepared solution-suspension they add the dry filler in the ratio of (1000-10000):1 to the total weight of the fraction of nanoparticles, it is thoroughly mixed, after that water is evaporated and the resulting concentrate is dried to constant weight. The concentrate prepared in that way is embedded into the dry mixture of the mineral binder and the filler (filler with auxiliary agents) by graduating the concentrate so as to ensure the presence of MNTS in the amount from 0,0003% to 3% by total weight of the nanocomposite material. The homogeneity of the mixture is ensured by the mechanical stirring in a compulsory mixer; in that way a method of successive dilution of the previously prepared concentrate is used. After that a calculated amount of water is added under constant stirring. The obtained solution of building mortar is underpoured into a mold and they assure a maturation of the nanocomposite material during 28 days under normal conditions.

### Example 1. Obtaining of the carbon particles of the toroidal shape

The cathode deposit is obtained by an electro-arched erosion of an anode graphite rod with a section of 100 mm² at a current density of 200 A/cM² and a voltage drop on the arc of 24 V in a helium atmosphere at a pressure of 70 Torr. They separate the dense crust of the cathode deposit from the loose middle, mill it to a powder with an average dispersion of 200-800 nm and place it in the rotating quartz tube located in the superhigh frequency field with a frequency of 2,5 GHz and a power of 1000 Wt. After 100 min of the gas-phase oxidation under these conditions, the obtained powder is cooled and is placed in a vacuum volume on the negative electrode in the inter-electrode space between the cathode and the anode. After that the potential difference between the cathode and the anode is increased until the self-emission current appears. With increasing of the self-emission current a part of multi-layered carbon nanoparticles migrates to the positive electrode. At the end of the process, they are collected from the surface of the anode and are converted into dispersion, for example, in dimethylformamide.

### Example 2. Obtaining of the carbon particles of the toroidal shape

The product is obtained as in Example 1, but the gas-phase oxidation is carried out in an atmosphere comprising an excess quantity of oxygen, for example, from 20% to 60%.

### Example 3. Obtaining of the carbon particles of the toroidal shape

The product is obtained as in Example 1, but after the gas-phase oxidation the multi-layer carbon nanoparticles are additionally oxidized electrochemically in an aqueous electrolyte comprising solutions of chlorine compounds.

### Example 4. Obtaining of the carbon particles of the toroidal shape

The product is obtained as in Example 1, but the isolation of the torus-like multi-layered carbon nanoparticles is carried out under the electric field in a dielectric medium with a high value of a dielectric permeability (such as white-spirit).

### Example 5. Obtaining of the carbon particles of the toroidal shape

The product is obtained as in Example 1, but after the gas-phase oxidation they cool additionally the multi-layered carbon nanoparticles by placing in the medium of the liquid gas (nitrogen, helium), bubble and separate the deposit from the liquid phase in the electric field followed by an evaporation of the liquid gas and obtaining of two types of the carbon powder which is further processed, as shown in Example 1.

### Example 6. Obtaining of the product for comparison

In the compulsory mixer of the rotary type with a volume of 300 liters it is charged, as a mineral binder, 40 kg of Portland cement PC500D0; as a filler, 40 kg of quartz sand and, as an auxiliary agent, 8 kg of modifier MB10-01. The dry mixture of the mineral binder and the filler with the auxiliary agent is stirred during 20 minutes, after that it is added in the mixer 12 kg of water comprising 0,003 kg (0,003% by weight) of the carbon nanotubes. The mixture is stirred during 5 minutes and underpoured into molds in which the nanocomposite material hardens during 28 days in normal conditions.

### Example 7. Obtaining of the nanocomposite material according to the claimed technical solution

The multi-layered carbon nanoparticles of the toroidal shape (MNTS) in the amount of 0,003 kg are mixed with 10 kg of water, after that are subjected to homogenization in an ultrasonic homogenizer. In the prepared solution-suspension they add 10 kg of quartz sand, thoroughly stir, after that water is evaporated and the obtained concentrate is dried to a constant weight. The concentrate prepared in that way is embedded into the dry mixture from 30 kg of Portland cement PC500D0; 40 kg of quartz sand and 8 kg of concrete modifier MB10-01. The mixture is thoroughly stirred during 20 minutes to achieve maximum uniformity. After that 12 kg of water is added under constant stirring and they continue to stir during 5 minutes. The obtained solution of building mortar is underpoured into a mold and they assure a maturation of the nanocomposite material during 28 days under normal conditions.

### Example 8. Obtaining of the nanocomposite material

The nanocomposite material is obtained as in Example 7, but the amount of MNTS is 0,0003 kg.

### Example 9. Obtaining of the nanocomposite material

The nanocomposite material is obtained as in Example 7, but the amount of MNTS is 3 kg; of Portland cement PC500D0 is 16 kg; of quartz sand is 54 kg.

### Example 10. Obtaining of the nanocomposite material

The nanocomposite material is obtained as in Example 7, but additionally 0,0003 kg of nanotubes is injected.

### Example 11. Obtaining of the nanocomposite material

The nanocomposite material is obtained as in Example 7, but additionally 0,03 kg of nanotubes is injected. Herewith the amount of Portland cement PC500D0 is 20 kg; of quartz sand is 50 kg.

### Example 12. Obtaining of the nanocomposite material

The nanocomposite material is obtained as in Example 7, but additionally 0,003 kg of fullerenes is injected. Herewith the amount of Portland cement PC500D0 is 25 kg; of quartz sand is 48 kg; of modifier MB10-01 is 5 kg.

### Example 13. Obtaining of the nanocomposite material

The nanocomposite material is obtained as in Example 7, but additionally 0,00003 kg of fullerenes is injected.

### Example 14. Obtaining of the nanocomposite material

The nanocomposite material is obtained as in Example 7, but the fraction of nanoparticles is consisted in 0,005 kg MNTS; 0,001 kg of fullerenes and 0,094 kg of nanotubes. Herewith the amount of Portland cement is 20 kg; of quartz sand is 53 kg; of modifier MB10-01 is 5 kg.

The results of tests of samples of the nanocomposite materials based on mineral binders, obtained in accordance with the examples 1-14 are shown in Table 1.

**Table 1**

| Nº | Sample | Characteristics of the sample | | |
|---|---|---|---|---|
| | | Compressive strength, MPa | Water resistance, Atm | Content of the binder, % |
| 1. | Manufactured according to ex. 6 (Product for comparison) | 67 | 12 | 40 |
| 2. | Manufactured according to ex. 7 | 80 | 18 | 40 |
| 3. | Manufactured according to ex. 8 | 72 | 16 | 40 |
| 4. | Manufactured according to ex. 9 | 68 | 14 | 16 |
| 5. | Manufactured according to ex. 10 | 84 | 20 | 40 |
| 6. | Manufactured according to ex. 11 | 72 | 14 | 20 |
| 7. | Manufactured according to ex. 12 | 76 | 16 | 25 |
| 8. | Manufactured according to ex. 13 | 82 | 18 | 40 |
| 9. | Manufactured according to ex. 14 | 78 | 16 | 20 |

From the results of the tests listed in the table it is seen that the claimed nanocomposite material has a higher compressive strength, higher values of water resistance and can comprise a fewer amount of the mineral binder than the nanocomposite material without MNTS.

## Claims

1. Nanocomposite material based on mineral binders, comprising a mineral binder, a mineral filler and a fraction of nanoparticles, **characterized in that** the fraction of nanoparticles includes multi-layered carbon particles of a toroidal shape with a size from 15 to 150 nm, wherein the ratio between the outer diameter and the thickness of the thorus body is in the range of (10-3):1.

2. Nanocomposite material according to claim 1, wherein the said carbon particles of the toroidal shape have a fulleroid type.

3. Nanocomposite material according to claim 2, wherein an inter-layer distance in the said particles of the toroidal shape is equal to 0,34-0,36 nm.

4. Nanocomposite material according to claim 1, wherein the said particles of the toroidal shape represent those particles of a crust of a cathode deposit obtained by evaporation of a graphite anode in an arc process and subjected to a gas-phase oxidation, which are exposed to an electric field effect.

5. Nanocomposite material according to claim 4, wherein the crust is milled before the oxidation.

6. Nanocomposite material according to claim 4, wherein the gas-phase oxidation is carried out in a superhigh frequency field.

7. Nanocomposite material according to claim 6, wherein, after the gas-phase oxidation, a liquid-phase oxidation is carried out additionally, before testing for susceptibility to the electric field effect.

8. Nanocomposite material according to claim 1, wherein the fraction of nanoparticles additionally includes carbon nanotubes.

9. Nanocomposite material according to claim 8, wherein the ratio between the carbon nanotubes and the said carbon nanoparticles is from 1:10 to 10:1.

10. Nanocomposite material according to claim 1, wherein the fraction of nanoparticles additionally includes fullerenes.

11. Nanocomposite material according to claim 10, wherein the ratio between the fullerenes and the said nanoparticles is from 1:10 to 1:10000.

12. Nanocomposite material according to claim 1, wherein the said particles of the toroidal shape constitute at least 5% by weight of the fraction of nanoparticles with the deduction of a weight of the fullerenes and nanotubes if they are present.

13. Nanocomposite material according to claim 1, wherein the said fraction of nanoparticles is present in an amount in the range from 0,0003% to 3% by total weight of the nanocomposite material.

14. Nanocomposite material according to anyone of claims 1-13, wherein the mineral filler is quartz or washed river sand.

15. Nanocomposite material according to anyone of claims 1-13, wherein in addition to the mineral filler in an amount in the range from 0,1% to 20% by total weight of the nanocomposite material, there are auxiliary agents (concrete modifiers, plasticizers, hardening accelerators or retarders etc.).
